# EUROPEAN PATENT APPLICATION

(11) **EP 2 551 130 A1**
(43) Date of publication of application: **30.01.2013**
(21) Application number: 12178067.0
(22) Date of filing: 26.07.2012
(51) Int. Cl.: B60C 23/00

(54) **Adjustable tyre pressure system and method**

(30) Priority: 27.07.2011 US 201113191552
(71) Applicant: The Goodyear Tire & Rubber Company, Akron, OH 44316-0001 (US)
(72) Inventor: Linster, Tom Dominique, L-9370 Gilsdorf (LU)
(74) Representative: Kutsch, Bernd

(57) **Abstract**

An adjustment system for a tire-mounted vehicle and a method of adjusting tire performance in a tire-mounted vehicle is disclosed. The system comprises a vehicle (10) comprising at least one electronic vehicle control system selected form the group consisting of an anti-lock brake system (22), a steering wheel control system, an electronic stability system 24), a suspension control system and a global positioning system (26); a plurality of tires (12) supporting the vehicle (10), each tire (12) comprising a circumferential tire tread region and tire sidewalls enclosing an tire cavity inflated to an inflation pressure; and an electronic valve system (30) mounted to operatively adjust on a tire-by-tire basis the inflation pressure within the tire cavity of each of the plurality of tires (12) responsive to an electronic input signal from at least one of the vehicle control systems.

## Description

### Field of the Invention

The invention relates generally to a vehicle system having air maintenance capability for adjusting inflation in vehicle tires and, more specifically, to a vehicle system and method for automatically making such adjustments.

### Background of the Invention

Changes in road conditions can cause the performance of the vehicle tires to become less than satisfactory and result in driver dissatisfaction. For example, tires on a vehicle are optimally expected to contribute to maximum fuel efficiency on dry, straight roads; maximum handling performance is desired on roads having severe curves; and wet traction performance is sought on water covered roads. To achieve a tire having a versatility to perform satisfactorily on all possible road conditions has to date proven problematic.

### Summary of the Invention

The invention relates to a system in accordance with claim 1 and to a method in accordance with claim 7.

Dependent claims refer to preferred embodiments of the invention.

According to an aspect of the invention, a tire adjustment system and utilization means for a tire-mounted vehicle includes a vehicle having at least one electronic vehicle control system taken from the group: anti-lock brake system; steering wheel control system, electronic stability system; suspension control system; global positioning system; and an electronic valve system mounted to operatively adjust on a tire-by-tire basis the inflation pressure within each tire cavity responsive to an electronic input signal from at least one of the vehicle control systems.

In another aspect, the vehicle control system operatively detects in real time from a set of predetermined identifiable road conditions one or more identified current road condition(s) traversed by the vehicle and operatively actuates the electronic valve system to adjust the inflation pressure within each tire to an optimal inflation for the identified current road condition.

In a further aspect, the electronic valve system includes one or more pairs of coupled compressor units and valve members, the compressor unit pumping air responsive to an electronic input signal through the valve member and into a tire cavity.

The set of predetermined identifiable road conditions, according to another aspect of the invention, includes road curvature, road surface condition, and road friction characteristics and the electronic valve system adjusts the inflation pressure within each tire to operatively reconfigure the tire tread into an optimal tire tread performance configuration for the identified current road condition(s).

### Definitions

"Footprint" means the contact patch or area of contact of the tire tread with a flat surface at zero speed and under normal load and pressure.

### Brief Description of the Drawings

The invention will be described by way of example and with reference to the accompanying drawings in which:
FIG. 1 is a perspective view of a vehicle employing the subject adjustment system.
FIG. 2 is a diagrammatic view of the system.
FIG. 3 is a plan view of a tread footprint in a low inflation setting.
FIG. 3B is a plan view of a tire tread footprint in a normal inflation setting.
FIG. 3C is plan view of a tire tread footprint in a raise inflation setting.
FIG. 4 is a diagrammatic view of the system in a one valve system configuration.
FIG. 4A is a sectional view through the valve unit of FIG. 4 taken along the line 4A-4A.
FIG. 5 is a diagrammatic view of the system in a two valve system configuration.
FIG. 5A is a section view through the valve assembly of FIG. 5 taken along 5A-5A.
FIG. 5B is a section view through the exhaust valve of FIG. 5 taken along 5B-5B.

### Detailed Description of the Invention

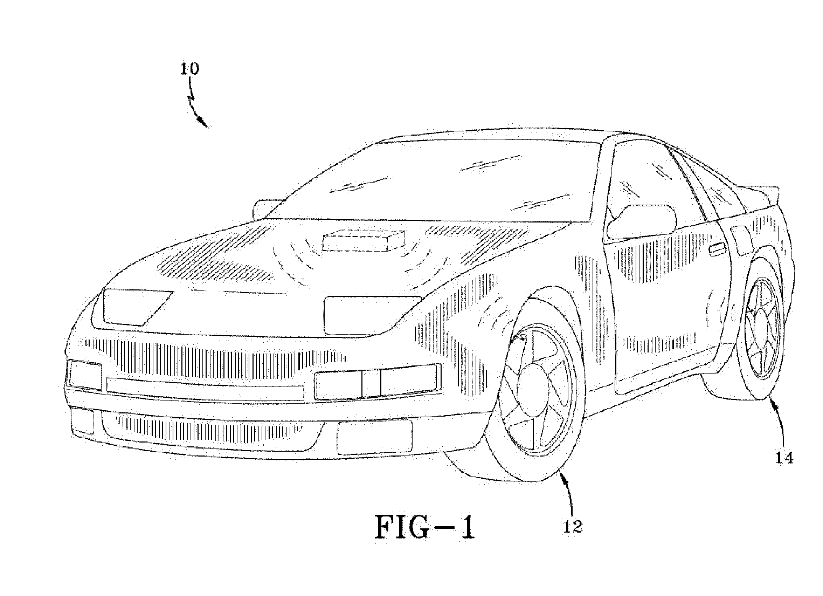

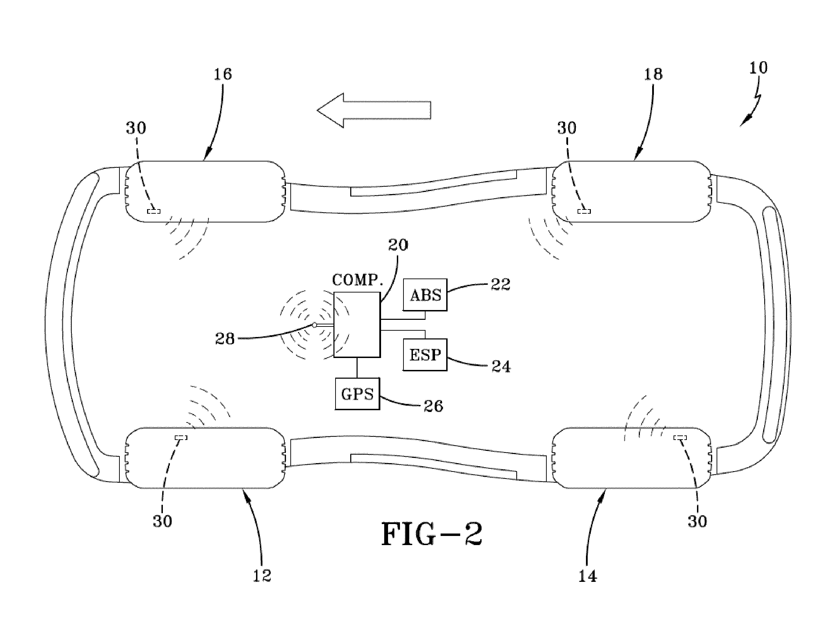

Referring initially to FIGS. 1 and 2, a vehicle 10 of conventional construction is mounted on tires 12, 14, 16, and 18. While a passenger car configuration is shown, the subject invention can likewise find application in alternate vehicle categories such as off-road equipment and commercial trucks. The vehicle 10 is conventionally equipped with an on-board computer 20 and one or more systems are incorporated into the vehicle such as an anti-lock brake system (ABS) 22, an electronic suspension program (ESP) 24 and/or a global positioning system (GPS) 26 and possibly an antenna 28. Such systems are electronically connected to the computer 20 and provide control of vehicle systems or generation of user-enabling information for vehicle operation. For example, the ABS system provides for control of vehicular braking in certain operational conditions; the ESP provides an automated suspension adjustment to the vehicle; and the GPS information to the operator useful for route calculation and positioning.

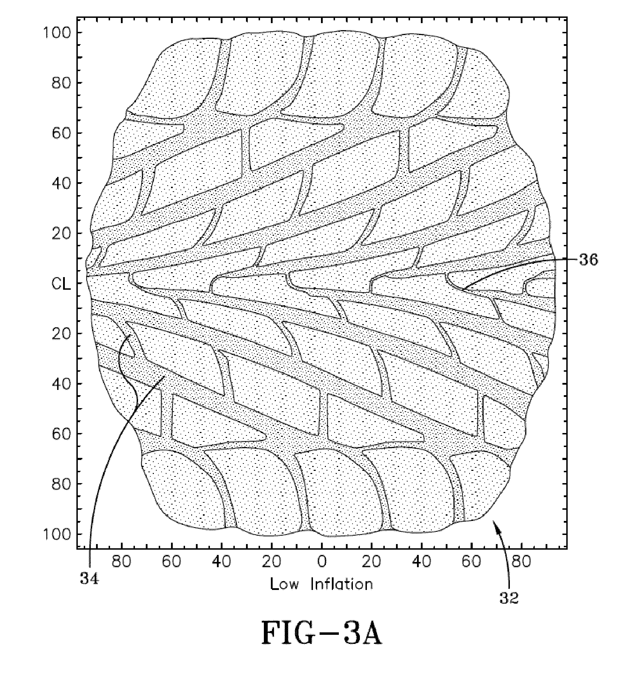

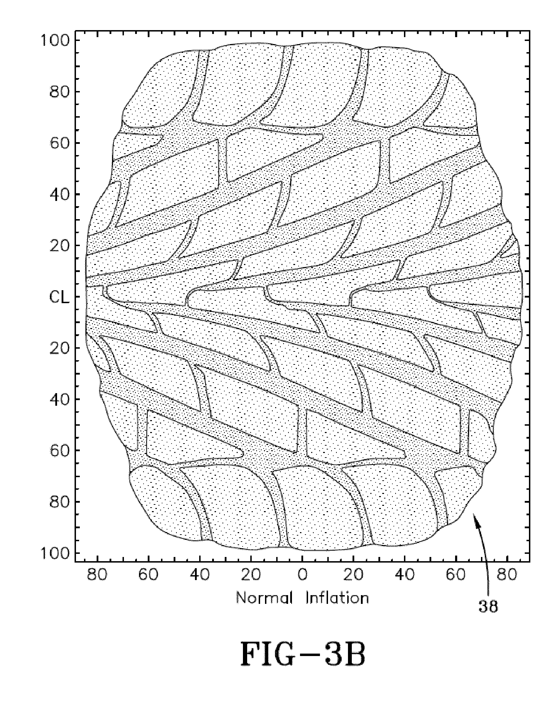

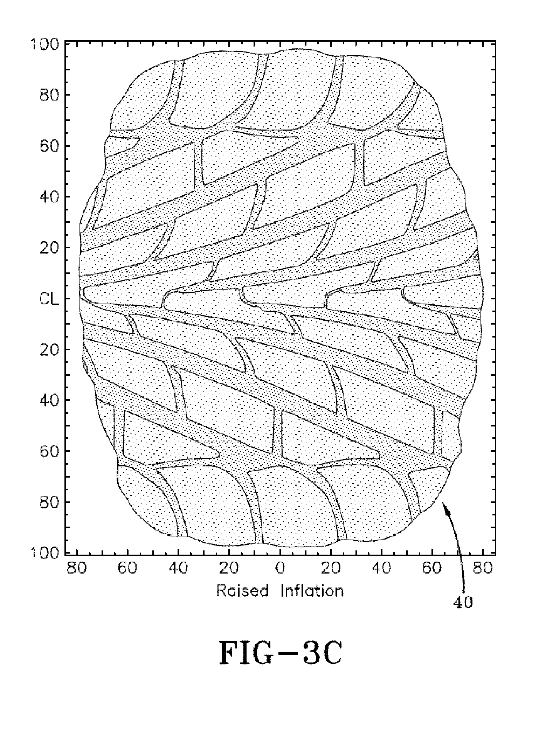

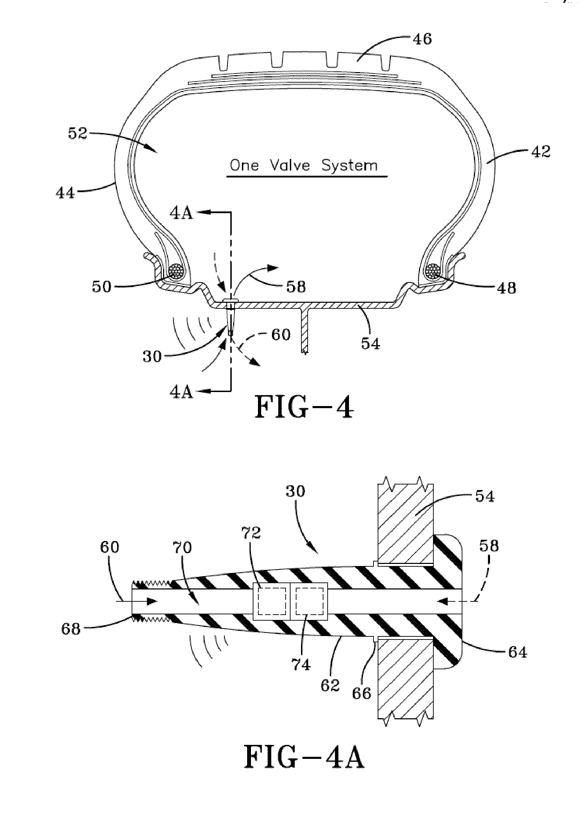

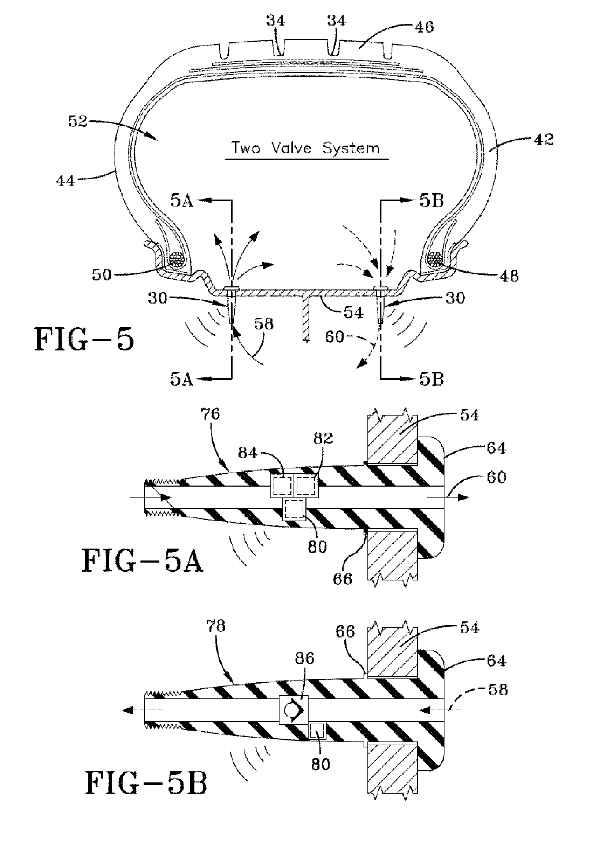

As seen in FIGS. 4 and 5, the tires 12, 14, 16, and 18 are of conventional construction, each having a pair of sidewalls 42, 44 extending from a respective bead 48, 50 to a circumferential tire tread 46. The tire encloses a cavity 52 that is inflated to a desired air pressure and each tire mounts to a rim 54. During operation of the vehicle, each tire forms a tire footprint against the ground surface. As seen in FIGS. 3A through 3C, the surface area of the tire footprint as measured in millimeters varies according to the inflation level of the tire; FIG. 3A showing the footprint 32 generated on opposite sides of the tire centerline CL from a low inflated tire; FIG. 3B showing the footprint 38 generated on opposite sides of the tire centerline CL from a normal inflated tire; and FIG. 3C showing the footprint 40 generated on opposite sides of the tire centerline CL from a raised inflation tire. The surface area of footprint 32 is greater than footprint 38 which is then greater than footprint 40. In general, the greater a tire inflation level, the smaller a footprint generated by the tread pattern will be produced.

The tire tread forming the footprints of FIGS. 3A through 3C is constructed from a pattern of grooves 34 and siping elements 36. Differing tire inflation levels generate different footprints by the tread pattern as seen from FIGS. 3A through 3C, each of which being preferred for a respective set of road and road surface conditions. For example, the footprint 32 of FIG. 3A, being the largest footprint created by an underinflated tire, will result in a tire exhibiting moderate rolling resistance performance, standard handling performance, and excellent dry/wet gripping characteristics. On a road following a curved path and/or wet surface conditions, the footprint of FIG. 3A may be preferred. The footprint 38 of FIG. 3B produced by a normally inflated tire, on the other hand, will result in a tire exhibiting normal level of rolling resistance, outstanding handling, and normal level of wet/dry gripping. The footprint 40 of FIG. 3C produced by an raised inflation level will be more rounded and result in a tire exhibiting very good rolling resistance and handling and wet/dry grip at a normal level. Depending on the road topography and surface conditions, accordingly, one of the three footprint configurations may be deemed preferable over the other two. It is self understood that also intermediate footprint configurations might be desirable and inflation pressure adjusted to achieve those.

The electronic systems of a vehicle such as ABS and ESP and GPS can be utilized to identify the road topography and surface conditions encountered by a vehicle in real time. A set of predetermined identifiable road conditions may be programmed into the computer 20. The ABS, ESP, and GPS systems may be used to input road condition information into the computer in real time from which an identified current road condition may be ascertained from the stored set of identifiable road conditions. Once an identification of the current road condition (topography and surface conditions), a preferred footprint for each of the tires may be determined best suited to meet the current road condition.

Pursuant to the invention, with reference to FIGS. 4 and 4A, each of the tires 12, 14, 16, and 18 is equipped with one or more remotely controlled electronic valve systems 30. The valve system(s) 30 are used to adjust the inflation pressure of each individual tire position, according to the input of the vehicle electronic control system (ABS, ESP, steering wheel, GPS route calculation and position location). The valve system 30 may be a single valve system for inputting and outputted air from the tire cavity 52 as shown in FIGS. 4 and 4A, or for faster response there can be one valve for inflating and a separate valve for deflating the tire quickly according to the suspension control of the vehicle as shown in FIGS. 5, 5A and 5B. In the one valve system, the valve system includes an elongate valve body 62 mounted to extend through the rim 54. The body 62 includes an enlarged retention cap 64 abutting an outer surface of the rim 54, a retainer flange 66 abutting an inner surface of the rim 54 and the body 62 extends a forward end 68 into the cavity 52. An axial air passageway 70 extends through the body 62 and allows external air to flow through the body 62 and into the cavity 52 as shown by arrow 58 and allow air to flow in a reverse direction through the body 62 from the cavity 52 as shown by arrow 60.

In the valve body 62, a small pump/compressor 72 coupled to an open/shutoff valve 74 of a type commercially available are housed. The pump/compressor is electronically controlled to increase or reduce tire inflation by the directional passage of air through the valve 74 into and from the tire cavity. The electric power for the compressor 72 may be supplied through wire or wireless known techniques.

FIGS. 5, 5A, and 5B show a two valve system in which an intake valve member shown in FIG. 5B incorporates an intake valve 86 coupled to transceiver 80 opens to allow air to flow into the cavity 52 as indicated at arrow 58. A second valve member is mounted into the rim 54 and includes the pump/compressor 84, valve component 82, and a transceiver 80. The second valve member shown in FIG. 5A opens to allow air to flow through the valve passageway in direction 60 to reduce the air pressure within the tire. More valve assemblies 30 than the number shown may be employed to increase the speed of inflation adjustment if desired.

From the foregoing, it will be appreciated that the footprint adjustment made to each tire by changing inflation pressure accomplishes multiple advantages. The performance, environmental and safety of the vehicle is enhanced by real time adjustment to tire inflation pressure. Through the inflation adjustment system, the vehicle may be made to operate at maximum fuel efficiency when road topography and surface conditions permit. On curvy roads, the system adjusts tire inflation pressure and footprint to allow the vehicle to operate at maximum handling characteristics. During rain or on wet road conditions, the system adjusts tire inflation pressure and footprint to operate a maximum gripping level. In addition, the system will be useful to keep a desired inflation pressure, or footprint, of the tires even in the case of a defective tire which might lose air. In such case, the inflating compressor/pump will pump air into the tire more frequently or continuously to compensate for the air loss due to a leak. Thus, this system also contributes to extended mobility of the vehicle.

## Claims

1. An adjustment system for a tire-mounted vehicle, the system comprising:
a vehicle (10) comprising at least one electronic vehicle control system selected form the group consisting of an anti-lock brake system (22), a steering wheel control system, an electronic stability system 24), a suspension control system and a global positioning system (26);
a plurality of tires (12) supporting the vehicle (10), each tire (12) comprising a circumferential tire tread region and tire sidewalls enclosing a tire cavity inflated to an inflation pressure;
an electronic valve system (30) mounted to operatively adjust on a tire-by-tire basis the inflation pressure within the tire cavity of each of the plurality of tires (12) responsive to an electronic input signal from at least one of the vehicle control systems.

2. The adjustment system of claim 1, wherein the vehicle control system is configured to operatively detect in real time from a set of predetermined identifiable road conditions at least one identified current road condition traversed by the vehicle (10).

3. The adjustment system of claim 1 or 2, wherein the vehicle control system is configured to operatively actuate the electronic valve system (30) to adjust the inflation pressure within each of the plurality of tires (12) to a desired or optimal inflation pressure for the at least one identified current road condition.

4. The adjustment system of at least one of the previous claims, wherein the electronic valve system comprises at least one coupled compressor unit (72) and valve member (74), wherein the compressor unit (72) is configured to operatively pump air responsive to an electronic input signal through the valve member (74) and into a tire cavity.

5. The adjustment system of claim 2, wherein the set of predetermined identifiable road conditions includes road curvature, road surface condition, and road friction characteristics.

6. The adjustment system of at least one of the previous claims, wherein the electronic valve system (30) is configured to operatively adjust the inflation pressure within the plurality of tires (12) to operatively reconfigure the tire tread footprint providing a desired or optimal tire tread performance for the at least one identified current road condition.

7. A method of adjusting tire performance in a tire-mounted vehicle, the method comprising:
utilizing at least one electronic vehicle control system selected form the group consisting of an anti-lock brake system (22), a steering wheel control system, an electronic stability system 24), a suspension control system and a global positioning system (26) to monitor in real time a plurality of parameters affecting vehicle performance;
supporting the vehicle (10) by a plurality of tires (12), each tire (12) comprising a circumferential tire tread region and tire sidewalls enclosing an tire cavity inflated to an inflation pressure;
actuating an electronic valve system (30) mounted to selectively adjust in real time on a tire-by-tire basis the inflation pressure within the tire cavity of each of the plurality of tires (12) responsive to an electronic input signal from at least one of the vehicle control systems.

8. The method of claim 7, further comprising detecting in real time by the vehicle control system from a set of predetermined identifiable road conditions at least one identified current road condition, and associating with each of the identifiable road conditions a pre-identified desired or optimal tire tread footprint configuration.

9. The method of claim 8, further comprising actuating the electronic valve system by the vehicle control system to adjust the inflation pressure within the plurality of tires to reconfigure the tire tread footprint and provide an optimal tire tread performance for the at least one identified current road condition.

10. The method of claim 8 or 9, further comprising utilizing at least one coupled compressor unit (72) and valve member (74) within the electronic valve system (30), the compressor unit (72) pumping air responsive to an electronic input signal through the valve member (74) and into a tire cavity.

11. The method of claim 8, further comprising defining the set of predetermined identifiable road conditions to include road curvature, road surface conditions, and road friction characteristics.
